# FASCICULE DE BREVET EUROPEEN

(11) **EP 0 353 144 B1**
(45) Date de publication et mention de la délivrance du brevet: **28.09.1994**
(21) Numéro de dépôt: 89402104.7
(22) Date de dépôt: 25.07.1989
(51) Int. Cl.: C12H 1/04, C12G 3/06

(54) **Procédé de préparation d'une solution aqueuse de principes organoleptiques et application à l'obtention d'eaux de vie de type whisky incolore**
Verfahren zur Herstellung einer wässrigen Lösung aus organoleptischen Substanzen und deren Verwendung zur Herstellung von Spirituosen vom farblosen Whisky-Typ
Method of preparing an aqueous solution of organoleptic ingrendients, and its use in the making of colourless whisky-type spirits

(30) Priorité: 25.07.1988 FR 8810001
(43) Date de publication de la demande: 31.01.1990
(73) Titulaire: PERNOD-RICARD, F-75008 Paris (FR)
(72) Inventeur: Clauzure, André Charles, F-77166 Grisy-Suisnes (FR)
(74) Mandataire: Warcoin, Jacques

(56) Documents cités:
- FR-A- 2 144 848
- US-A- 2 367 557
- US-A- 2 859 117
- US-A- 3 222 180
- CHEMICAL ABSTRACTS, vol. 74, no. 7, 15 février 1971, Columbus, OH (US); G.I. FERTMAN et al., p. 229, no. 30725k#

## Description

La présente invention concerne la préparation d'eaux de vie vieillies sous bois, incolores.

Le mode d'élaboration de certaines eaux de vie nécessite un vieillissement de ces alcools sous bois, vieillissement qui s'accompagne alors de leur coloration.

Les habitudes de consommation évoluant, les consommateurs souhaitent aujourd'hui des alcools, tels whiskies ou eaux de vie, incolores.

En particulier, parmi les leaders d'opinion, un "scotch whisky pur malt vieilli 5 ans au moins" incolore serait très apprécié. Ce type de produit incolore permettrait, en outre, la réalisation de cocktails à base d'eau de vie notamment de whisky dont les teintes ne seraient pas altérées par la couleur ambrée du produit de base.

La solution de ce problème pourrait être trouvée dans la distillation de l'eau de vie colorée. Bien que le résultat de la distillation soit acceptable, il présente des imperfections en particulier dans le cas des whiskies, cette distillation lui ôte tout "compte d'âge" aux yeux des autorités de la SWA (Scotch Whisky Association).

Le brevet US-A-2859117 décrit l'extraction des arômes d'une eau de vie à partir de charbon actif ayant adsorbé ces arômes par épuisement à l'aide de solvants, et récupération d'un concentré exempt d'eau.

Afin d'obtenir des produits incolores, en particulier des whiskies incolores, on a proposé de décolorer le whisky à l'aide de charbon actif, les produits obtenus présentent des qualités organoleptiques quelque peu éloignées de celles du produit d'origine, mais ce procédé permet de garder le "compte d'âge" des scotch whiskies.

La présente invention propose un procédé qui permet d'obtenir des eaux de vie incolores ayant toujours le "compte d'âge" et présentant les principales caractéristiques organoleptiques du produit d'origine, en particulier la présente invention concerne un procédé de préparation d'une solution aqueuse incolore des principes organoleptiques d'une eau de vie vieillie sous bois, caractérisé en ce que :
a) on décolore l'eau de vie vieillie sous bois par mise en présence avec un charbon actif, soit par adjonction du charbon actif dans la masse de l'eau de vie à décolorer soit par percolation de l'eau de vie au travers du charbon actif placé dans une colonne,
b) après décoloration, on sépare le charbon actif d'avec l'eau de vie incolore,
c) on distille de l'eau sur le charbon actif récupéré en b), et
d) on récupère le distillat de l'étape c) qui est une solution aqueuse incolore de principes organoleptiques de l'eau de vie de départ.

Ce procédé est applicable plus particulièrement aux scotch whiskies et autres alcools de grains vieillis sous bois, bourbon par exemple, mais également aux armagnac, cognac et rhum, il convient néanmoins de choisir des eaux de vie de coloration pas trop prononcée.

Le distillat aqueux incolore de l'étape d) peut être utilisé comme une eau distillée aromatisée pour réduire le titre alcoolique de l'eau de vie obtenue à l'étape b) afin d'obtenir une eau de vie incolore ayant gardé son "compte d'âge". En effet, le SWA autorise l'utilisation d'eau distillée pour réduire le titre alcoolique des scotch whiskies tout en gardant le "compte d'âge".

L'invention concerne également les eaux de vie vieillies sous bois, incolores ainsi obtenues, de même que les solutions aqueuses de principes organoleptiques qui peuvent éventuellement être utilisées pour aromatiser d'autres produits alimentaires.

La décoloration du whisky ou des eaux de vie colorées est réalisée de préférence sur l'alcool sélectionné à plein degré alcoolique en lui additionnant du charbon actif ; la quantité de ce dernier est déterminée expérimentalement, elle est de l'ordre de 1 à 5 g/l. Quand le charbon est introduit dans la masse, le mélange, après homogénéisation, est laissé au repos pour une durée variant entre 2 jours à 1 semaine, au terme duquel l'alcool décoloré est recueilli par filtration et le charbon actif conservé. La filtration peut être réalisée sur plaques de cellulose. Quand la décoloration est obtenue par percolation sur le charbon actif le débit et le nombre de passages seront fixés lors d'essais préalables.

Ce charbon actif est ensuite utilisé pour la préparation de la solution incolore des principes organoleptiques. Il est introduit dans un alambic avec de l'eau et l'on procède à une distillation fractionnée. Les fractions intéressantes sont identifiées par dégustation, réunies et conservées.

En utilisant cette solution incolore des principes organoleptiques pour la réduction du titre alcoolique de l'eau de vie, décolorée selon ce procédé, il est ainsi restitué à cette dernière sa flaveur initiale.

L'exemple ci-dessous permettra de mettre en évidence d'autres caractéristiques et avantages de la présente invention.

### EXEMPLE

30 litres de whisky pur malt 5 ans Aberlour titrant 66,5 % l. sont traités avec 60 g de charbon actif, "Clarocarbon G Merck®".

Le mélange après homogénéisation est laissé au repos 4 jours, homogénéisé une nouvelle fois puis laissé au repos 3 jours supplémentaires. La filtration est ensuite effectuée sur plaques de cellulose pour en recueillir le whisky décoloré.

Le charbon actif ainsi récupéré est mis dans un alambic avec 4 litres d'eau et distillé. Par distillation fractionnée, 6 fractions sont ainsi recueillies :
- n^{o} 1 : 250 CC,
- n^{o} 2 : 250 CC,
- n^{o} 3 : 250 CC,
- n^{o} 4 : 500 CC,
- n^{o} 5 : 250 CC,
- n^{o} 6 : 500 CC,

L'apport en principes organoleptiques de chaque fraction ayant été apprécié par dégustation, seules les fractions 1, 2 et 3 sont choisies et réunies, constituant ainsi la solution incolore des principes organoleptiques du whisky.

Cette solution a été ainsi utilisée pour abaisser le titre alcoolique du whisky décoloré de 66,5 % à 40 % en volume dans les proportions suivantes :
- 0,601 l de whisky à 66,5 % vol,
- 0,015 l de solution de principes organoleptiques,
- QSP 1 l d'eau dépourvue de calcium.

En dégustation aveugle effectuée par des consommateurs avertis ("barmen" de Grands Etablissements Parisiens), le produit selon l'invention a été significativement préféré au produit traité sur charbon n'ayant pas reçu l'eau distillée aromatisée.

Le procédé ainsi décrit a l'avantage de donner des produits d'une flaveur proche de celle du produit de départ et qui demeure souple en bouche.

## Revendications

1. Procédé de préparation d'une solution aqueuse incolore des principes organoleptiques d'une eau de vie vieillie sous bois, caractérisé en ce que :
a) on décolore l'eau de vie vieillie sous bois par mise en présence avec un charbon actif, soit par adjonction du charbon actif dans la masse de l'eau de vie à décolorer soit par percolation de l'eau de vie au travers du charbon actif placé dans une colonne,
b) après décoloration, on sépare le charbon actif d'avec l'eau de vie incolore,
c) on distille de l'eau sur le charbon actif récupéré en b), et
d) on récupère le distillat de l'étape c) qui est une solution aqueuse incolore de principes organoleptiques de l'eau de vie de départ.

2. Procédé selon la revendication 1, caractérisé en ce qu'on utilise de 1 à 5 g de charbon actif par litre d'eau de vie dans l'étape a).

3. Procédé selon la revendication 2, caractérisé en ce que le charbon actif est séparé de l'eau de vie par filtration sur une substance de cellulose.

4. Procédé selon l'une des revendications précédentes, caractérisé en ce que l'eau de vie à décolorer est percolée sur une colonne de charbon actif.

5. Solution aqueuse incolore de principes organoleptiques d'eau de vie vieillie sous bois susceptible d'être obtenue par la mise en oeuvre du procédé selon l'une des revendications 1 à 4.

6. Solution selon la revendication 5, caractérisée en ce que l'eau de vie vieillie sous bois est choisie parmi les cognacs, les armagnacs, les rhums et les whiskies.

7. Application du procédé selon l'une des revendications 1 à 4, à la préparation d'une eau de vie vieillie sous bois, incolore, caractérisée en ce que le distillat incolore aqueux de l'étape d) est utilisé pour réduire le titre alcoolique de l'eau de vie incolore obtenue à l'étape b).

8. Application selon la revendication 7, caractérisée en ce que l'eau de vie est un scotch whisky pur malt vieilli 5 ans au moins.

9. Eau de vie incolore à titre réduit en alcool, contenant les principes organoleptiques d'une eau de vie vieillie sous bois, susceptible d'être obtenue par l'application selon l'une des revendications 7 et 8.

## Claims

1. Process for the preparation of a colourless aqueous solution of the organoleptic constituents of a potable spirit which has been aged in wood, characterized in that:
a) the potable spirit which has been aged in wood is decolourized by putting it into contact with an activated charcoal, either by addition of the activated charcoal to the mass of the potable spirit to be decolourized, or by percolation of the potable spirit through activated charcoal placed in a column,
b) after decolourization, the activated charcoal is separated from the colourless potable spirit,
c) water is distilled over the activated charcoal recovered in b), and
d) the distillate from stage c), which is a colourless aqueous solution of organoleptic constituents from the starting potable spirit, is recovered.

2. Process according to Claim 1, characterized in that from 1 to 5 g of activated charcoal is used per litre of potable spirit in stage a).

3. Process according to Claim 2, characterized in that the activated charcoal is separated from the potable spirit by filtration on a cellulose substance.

4. Process according to one of the preceding claims, characterized in that the potable spirit to be decolourized is percolated through a column of activated charcoal.

5. Colourless aqueous solution of organoleptic constituents of a potable spirit which has been aged in wood, obtainable by implementation of the process according to one of Claims 1 to 4.

6. Solution according to Claim 5, characterized in that the potable spirit which has been aged in wood is chosen from cognacs, armagnacs, rums and whiskies.

7. Application of the process according to one of Claims 1 to 4 to the preparation of a colourless potable spirit which has been aged in wood, characterized in that the colourless aqueous distillate from stage d) is used to reduce the alcoholic strength of the colourless potable spirit obtained in stage b).

8. Application according to Claim 7, characterized in that the potable spirit is a pure malt Scotch whisky which has been aged for at least 5 years.

9. Colourless potable spirit with reduced alcoholic strength, containing the organoleptic constituents of a potable spirit aged in wood, which is obtainable by the application according to one of Claims 7 and 8.

## Patentansprüche

1. Verfahren zur Herstellung einer wäßrigen, ungefärbten Lösung aus den wesentlichen organoleptischen Substanzen eines in Holz gealterten Branntweins, dadurch gekennzeichnet, daß:
a) man den in Holz gealterten Branntwein durch Inkontaktbringen mit einer Aktivkohle entfärbt, entweder durch Hinzufügen der Aktivkohle zu der zu entfärbenden Branntweinmenge oder durch Hindurchlaufenlassen des Branntweins durch die in einer Kolonne angeordneten Aktivkohle,
b) man nach der Entfärbung die Aktivkohle vom ungefärbten Branntwein abtrennt,
c) man Wasser über der in b) wiedergewonnenen Aktivkohle destilliert und
d) man das Destillat aus Schritt c), welches eine wäßrige, ungefärbte Lösung aus organoleptischen Substanzen aus dem eingesetzten Branntwein ist, gewinnt.

2. Verfahren nach Anspruch 1, dadurch gekennzeichnet, daß man in Schritt a) 1 bis 5 g Aktivkohle pro Liter Branntwein verwendet.

3. Verfahren nach Anspruch 2, dadurch gekennzeichnet, daß die Aktivkohle durch Filtration über eine Cellulosesubstanz vom Branntwein abgetrennt wird.

4. Verfahren nach einem der vorangegangenen Ansprüche, dadurch gekennzeichnet, daß der zu entfärbende Branntwein durch eine Kolonne mit Aktivkohle hindurchgeleitet wird.

5. Wäßrige, ungefärbte Lösung aus organoleptischen Substanzen aus über Holz gealtertem Branntwein, die erhältlich ist durch Anwenden des Verfahrens nach einem der Ansprüche 1 bis 4.

6. Lösung nach Anspruch 5, dadurch gekennzeichnet, daß der über Holz gealterte Branntwein ausgewählt ist aus Cognac, Armagnac, Rum und Whisky.

7. Anwendung des Verfahrens nach einem der Ansprüche 1 bis 4 zur Herstellung eines wäßrigen über Holz gealterten Branntweins, dadurch gekennzeichnet, daß das wäßrige, ungefärbte Destillat aus Schritt d) verwendet wird, um den Alkoholgehalt des in Schritt b) erhaltenen ungefärbten Branntweins zu reduzieren.

8. Anwendung nach Anspruch 7, dadurch gekennzeichnet, daß der Branntwein ein mindestens 5 Jahre gealterter Schottischer Malzwhisky ist.

9. Ungefärbter Branntwein mit reduziertem Alkoholgehalt, enthaltend organoleptische Substanzen aus über Holz gealtertem Branntwein als Grundbestandteile, erhältlich durch Anwendung eines der Ansprüche 7 und 8.
